# EUROPEAN PATENT APPLICATION

(11) **EP 2 945 127 A1**
(43) Date of publication of application: **18.11.2015**
(21) Application number: 14168297.1
(22) Date of filing: 14.05.2014
(51) Int. Cl.: G07B 15/02, H04W 4/02, H04W 4/04

(54) **Method and a device for fare collection in public transportation vehicles**

(71) Applicant: Siemens Schweiz AG, 8047 Zürich (CH); Siemens Aktiengesellschaft, 80333 München (DE)
(72) Inventor: Mogre, Parag, 80807 München (DE); Ramirez, Alejandro, 80797 München (DE); Schindhelm, Corina Kim, 81539 München (DE); Waas, Christian, 8047 Zürich (CH)
(74) Representative: Maier, Daniel Oliver

(57) **Abstract**

The known methods and system for registering tickets within a public transportation vehicle suffer the problem that tickets travelling in parallel to a public transportation are not recognized as a journey outside said public transportation vehicle. In consequence the holder will be charged for a fee without having used the service.

In order to properly register a ticket the registration takes only place when a comparison of the acceleration pattern of the vehicle match with the acceleration pattern of the ticket. For that purpose a gateway unit in the vehicle as well as the ticket are provided with an accelerometer.

## Description

The present invention relates to a method, a ticket and a gateway unit for fare collection in public transportation vehicles according to the independent claims.

Electronic ticketing - also called fare collection - is well known according to various pilot projects as e.g.
- Pilot project Intermobil Dresden;
- Easy Ride field trial SBB, presented e.g. in [2] and [4].

Tickets for air travel are already insofar electronic, as tickets are either displayed on a Smartphone for the check-in or made available for a passenger via E-Mail. An extensive overview of the various concepts can be found in [3].

Moreover to remove the need for booking, two approaches exist for public transportation vehicles:
Check in / Check Out (CICO);
Be in / Be Out (BIBO).

The CICO approach implies manually checking into a vehicle or station, travelling, and then manually checking out. This checking in and out may be done by moving an identification card close to a reader in the vehicle / station, or other methods like clicking on a smartphone screen. An advantage of the CICO systems over the regular electronic booking is that no booking has to be taken in advance, allowing for spontaneous travel. Another advantage is that the traveller only has to pay for the travel segments that were actually used.

The BIBO approach removes the necessity for manual checking in and out of the vehicle/station, achieving detection and identification of the passenger through automatic means (e.g. wireless techniques). The BIBO approach allows travelers to get in and out of vehicles, automatically booking the proper ticket.

Achieving the BIBO functionality represents an important engineering challenge, with a couple of companies introducing various solutions, each of which has its problems.

The most difficult problem to be solved by a BIBO system is to accurately detect the presence of a passenger inside a vehicle and to avoid a registration of a cyclist or driver in car when travelling in parallel to a public transportation vehicle.

The way most BIBO systems work, is by including a wireless transceiver inside a credit card sized BIBO ticket. This ticket will either actively send beacons, which may be read by a bus (or any other public transport vehicle) in the direct vicinity. Another option is for the BIBO ticket to receive beacons sent by the vehicle, as to know inside which vehicle it is located. Usually, a communications protocol will take care of securely exchanging ID information, to authenticate and eventually bill the customer.

The coupling between vehicle and passenger is thus made just by observing which vehicle can be seen by the passenger (or which passenger can be seen by the vehicle) during the travel from one station to the next. The wireless range will thus be the defining factor for this coupling, and a constant polling will make sure that the passenger is still inside the vehicle.

Such systems may be effective for long range train travel as well as air travel, but important problems arise with shorter distances. As an example, if a person has a BIBO ticket and drives with his or her car next to a BIBO-enabled bus during a traffic jam, it is very probable that the BIBO ticket will be in wireless range of the bus, and thus the person would be detected as being inside the bus. Such a scenarios lead to "false positives" and hence, customer complaints. As a result the acceptability of the BIBO system is reduced. A similar example leading to "false positives" would be a bicycle driver behind a bus during rush hour.

Some solutions have been proposed in the state-of-the-art to reduce these "false positives", which typically lead to additional infrastructure making the system more costly and complicated.

Another important challenge (which has been adequately solved by the currently developed solutions) is low power usage. If the BIBO ticket contains active component and a battery, power management techniques must ensure that said battery can live for a long time.

The above functionality according to the state of the art is disclosed in EP 1 210 693 B1 «Method and system for registering tickets» [1]. In EP 1 210 693 B1 there is also a solution for avoiding a registration of a ticket, which travels on bicycle or on a motorcycle in parallel to the public transportation vehicle. The proposed solution works, but has drawbacks for other cases.

The goal of the present invention is to provide a method and a device for fare collection in public transportation vehicles which eliminates the above mentioned drawbacks as especially:
False positive registration of tickets travelling in parallel to a public transportation vehicle.

This aim is reached by a method and a device for fare collection in public transportation vehicles according to the features given in independent claims.

### Summary of the invention

Using the accelerometer built into most of today's smartphones, an acceleration profile can be determined. This profile will be unique to the vehicle in which it was recorded and will be compared to vehicle's profile. A more thorough explanation will be done in the following pages of this document.

The proposed method for fare collection is based on the following components:
- Vehicle as e.g. bus or tram,
- Gateway BGW comprising:
   - a BIBO communication gateway (WLAN, Bluetooth and/or mobile communication),
   - an Inertial Measurement Unit (IMU);
- Smartphone: Customer's device including IMU and wireless communication (WLAN, Bluetooth and/or mobile communication),
- App: Software application running on said customer's smartphone

A smartphone being carried by a passenger will be subjected to almost the same accelerations than that of the vehicle it is being carried on. Differences in the acceleration experienced by the smartphone and the vehicle will typically come from usage of the phone (e.g. web surfing, making a call) or because of the means of propagation of the acceleration to the smartphone (e.g. a passenger holding a rail of the bus will have a delay between the propagation of the acceleration to the smartphone.

Comparing the acceleration pattern obtained between the smartphone and the vehicle, it becomes possible to identify whether they are exposed to the same acceleration pattern and consequently whether they are in the same vehicle. This comparison will be typically done on the BIBO Gateway due to security reasons and power consumption, but for privacy reasons it may as well be done on the smartphone or outside the vehicle on centralized equipment.

The working principle of the invention will now be described more in detail with reference to the accompanying drawings wherein:
Figure 1 Two sample of patterns deriving from two different smartphones;
Figure 2 Situation 1 depicting the registration/non registration of an electronic ticket;
Figure 3 Situation 2 depicting the registration/non registration of an electronic ticket;
Figure 4 Flowchart comprising the steps for a registration of an electronic ticket.

For the sake of clarity the following definitions will be introduced:
A) An electronic ticket or just called in short a «ticket» is a device comprising
   - means for a bidirectional wireless communication with a gateway BGW located and installed within a public transportation vehicle;
   - an accelerometer,
   - processor with memory for the control of communication and for the recording of the acceleration measured by the accelerometer.
B) A gateway unit or synonymously respectively a BGW-unit comprising
   - a BIBO communication gateway, wherein the communication is established by WLAN and/or Bluetooth and/or mobile communication GSM/UMTS/GPRS and the like;
   - an Inertial Measurement Unit IMU, this unit is provided with at least one accelerometer. Additionally or alternatively the IMU can be provided with a gyroscope. The BGW-unit is located and installed within a public transportation vehicle.

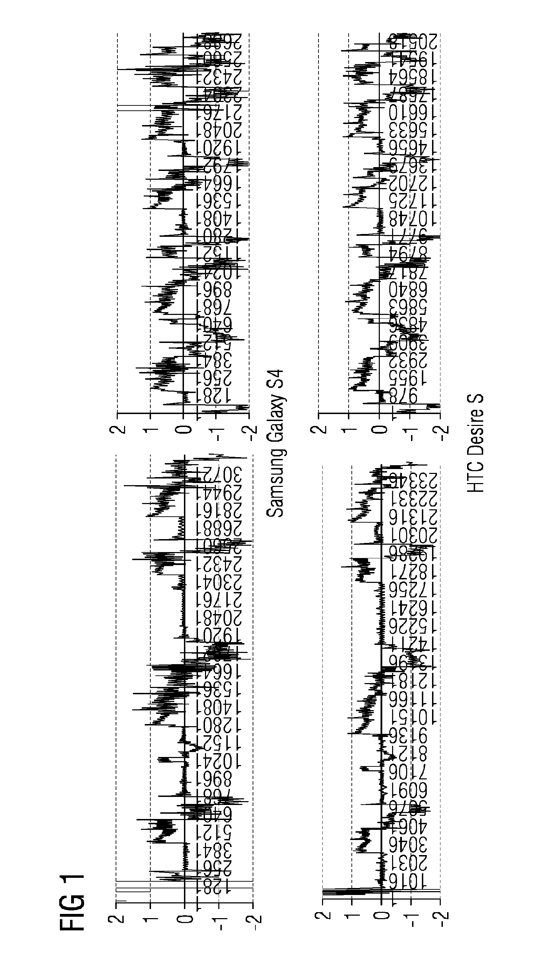

Figure 1 depicts raw measurements being recorded in a real bus with two smartphones of different manufacturers and different technology lying flat on a seat. The similarity of these patterns is so obvious, that it can be seen with the naked eye, without the need of any algorithms. This stupendous similarity proves easily the feasibility of the invention.

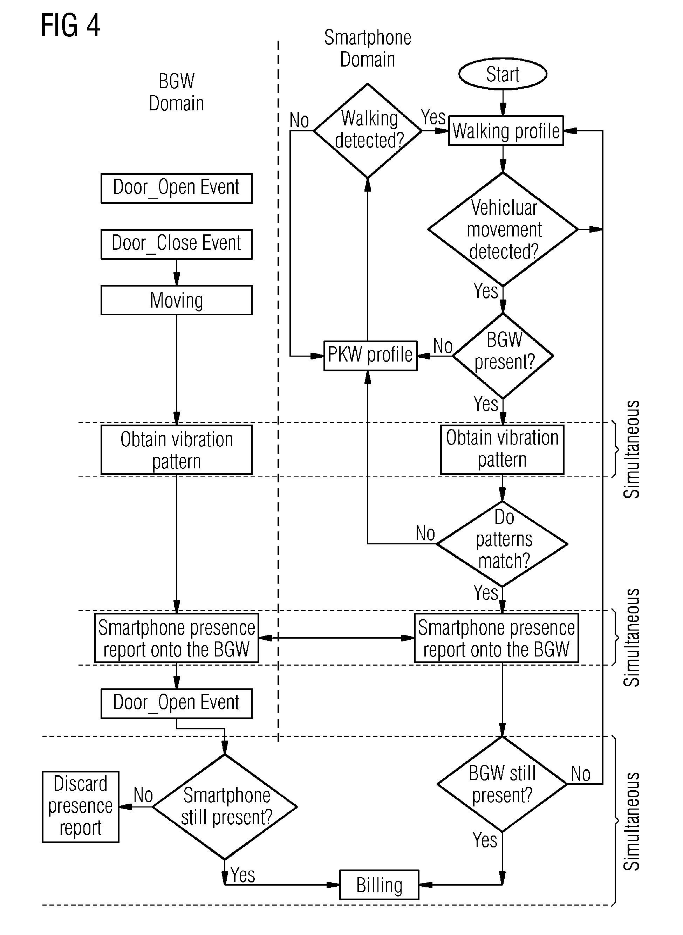

Figure 4 shows one example of a step-by-step functionality of the invention.

As a first step, indicated by «START» at the top right of the diagram, we may start from a mode we call «Walking profile». That means that the accelerometer shows that the person is not inside a moving vehicle. This includes walking, jumping, sleeping or any other activity in which there is a specific acceleration pattern of several seconds for each activity. During this mode, no communication with the outside world is required.

If at some point in time a vehicle movement may be detected, for example indicated by positive or negative acceleration during several seconds (negative because the phone may be held, for example, upside down). At this moment, the smartphone will search for a BGW-unit within range. Should no BGW-unit be within range, the smartphone will go into a mode call «PKW profile», which means that the smartphone is within a moving vehicle that is not a bus or tram. The «PKW Profile» will be switched to a «walking profile» whenever a walking is detected taking us back to the beginning of the diagram.

If a BGW-unit was in range when the vehicle movement was detected, it means that there is a possibility that the smartphone is located inside a bus, tram or other public transport vehicle. At this time, the acceleration/vibration pattern measured by the smartphone will be compared to the acceleration pattern measured by the vehicle. This will require communication between the smartphone and the vehicle's BGW-unit. As a side note, it is not mandatory to forward the complete recording of the acceleration; it may be possible to use a hashed function or similar that can be able to tell if both recordings have a high correlation.

If the patterns don't match and if there was only one BGW-unit in range, the system will go into the mode called «PKW profile», which means that the user is inside a vehicle, but it is not a BIBO-enabled vehicle. If more than one BGW is in range, the smartphone will repeat this step with another BGW and compare the acceleration measured (this step is not currently presented in the diagram). A useful rule to choose the first and following BGW-units (if more than one is in range), is to use the one with the highest signal strength as it will most likely be the one closest to the user. Other parameters that may be used for this selection can be the time since the last detection of movement or the order in time in which the BGW-units were seen.

Should a match between the acceleration of both devices be found, a registration between the smartphone and the vehicle may take place. The matching of the detected acceleration may take place more than once to increase the robustness of this detection (not shown on the diagram).

An option to recognize when the passenger has left the bus would be to check regularly that the BGW is still in range. Another option (not shown on the diagram) may be to check when the reported acceleration doesn't match anymore.

The proposed system respectively method works under all conditions because even in traffic jam conditions, not all vehicles accelerate and brake at the same exact millisecond. That leads to avoiding «false positives».

However, additional intelligence has to be built-in to solve two problems:

Obtaining the acceleration information if the smartphone is being used, affected by:
a) changing the orientation and
b) hitting the screen (e.g. web surfing, messaging).
Keeping energy consumption to a minimum (e.g. less than 10% of the smartphones total battery usage)

For the first point, let us solve first of all the problem of the acceleration caused by usage of the phone. We have identified that the acceleration caused by the vehicle has a frequency several times lower than 1 Hz. This means that the typical time between acceleration and deceleration is more than 1 second. In the case of using of the phone, for example during web surfing, the time between acceleration and deceleration is around 200ms.

Using frequency decomposition will allow us to isolate the components of different frequencies, thus being able to separate easier the acceleration due to use of the phone (which, as mentioned before, was found to be around 200ms) from the acceleration due to the vehicle (which as mentioned before is less than 1 Hz). This is only one possible solution. Alternatively no filtering anything at all should be carried out, as high frequency vibrations can also work as a fingerprint of the vehicle. For example, driving over potholes or an uneven road can also be used for identification. Another example is the vibration of the engine, as the revolutions per second of the engine as reference information can be taken.

In the case of the orientation of the phone, also regarding the first point, the simplest solution is to add all three axis of the acceleration sensor, so that the direction of the movement is no longer important. This solution may work well enough, but unfortunately useful information may be lost.

An alternative solution is to use a rotation matrix to obtain the orientation of the movement of the vehicle. For that, the lowest frequency of the acceleration (meaning slower consistent change in acceleration) must be detected, which could be done through the previously mentioned frequency decomposition. This will correspond to the movement direction of the vehicle. Isolating this component will make it a lot easier to compare both curves (one originating from the smartphone sensor and another one originating from the bus sensor), as the effect of the acceleration due to the use of the smartphone can be reduced. At this point, an important clarification must be made.

Today's very low cost acceleration sensors are prone to a stochastic drift in the value reported, with a drift rate of several seconds. For this reason, it is possible that the lowest frequency component of important magnitude originates from this drift. Should that be the case, there will be two important components of low frequency instead of one. Should that be the case, the component created by the drift will be constant, and can be identified beforehand.

For the second important problem, limiting energy consumption, our concept achieves this in several ways. First of all it should be mentioned that the typical current consumption of a low-cost acceleration sensor is less than 10µA during continuous operation. That is less power than a wristwatch, which can function for several years off a button cell/coin battery. Second, the communication between the smartphone and the vehicle will only take place when the acceleration of the smartphone indicates it being inside a vehicle. That way, communication will only take place a couple of times a day.

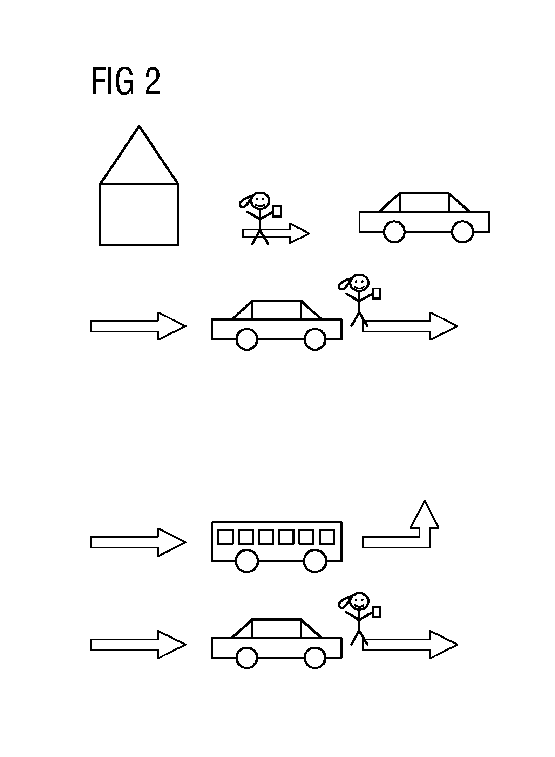

Figure 2 depicts a situation 1 for explaining a non-registration of ticket travelling in parallel to a public transportation vehicle:
2.1 Person Kim walks with a ticket to its car. The ticket is awaiting a vehicular movement.
2.2 A vehicular movement is detected by the ticket, but no BGW-unit is in range, therefore the ticket switches to a PKW-profile.
2.3 The ticket is due to a parallel travelling in the range of a BGW-unit. Since the ticket is in a PKW-profile, the ticket will not be registered by the BGW-unit.

In all situations according to Figure 2 the ticket has not been registered by the BGW-unit.

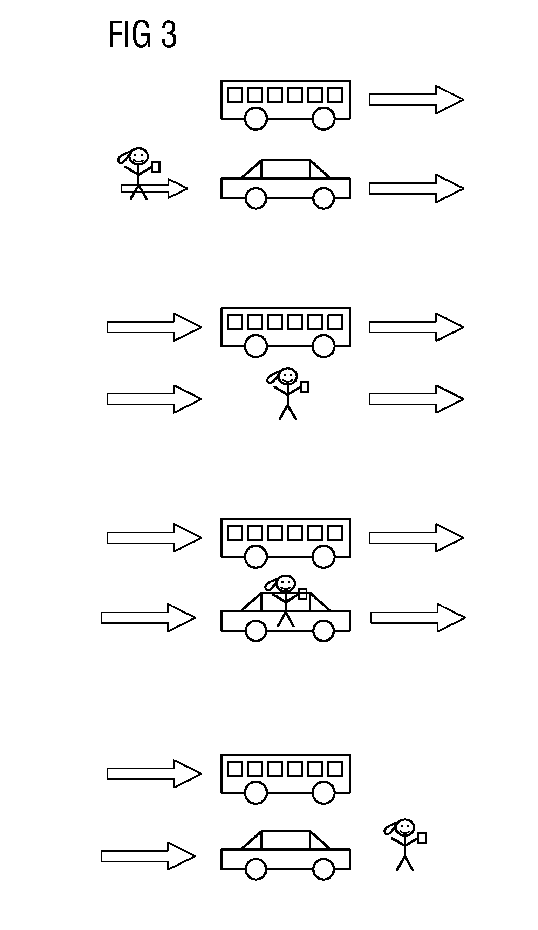

Figure 3 depicts a situation 2 for explaining a non registration of an electronic ticket travelling in parallel to a public transportation vehicle:
3.1 Person Kim walks with a ticket. The ticket is awaiting a vehicular movement.
3.2 A vehicular movement is detected by the ticket, a BGW-unit is in range, the acceleration pattern are compared either on the ticket or in the BGW-unit.
3.3 According to the previous comparison of the patterns: The patterns do not match, ticket is due to a parallel travelling in the range of a BGW-unit, therefore the ticket switches to a PKW-profile.
3.4 Walking is detected by the ticket, the tickets switchs off from the «PKW-profile» and switches to a «walking profile»; the ticket is awaiting a vehicular movement.

In all situations according to Figure 3 the ticket has not been registered by the BGW-unit.

The above explained situations 1 and 2 result in avoiding of a so called «false positive» that is avoiding a registration of a ticket, wherein the ticket didn't travel inside a public transportation vehicle.

Other important advantages of this method and the involved components over the state-of-the-art are:
i) The method can be readily implemented in a standard smartphone, as most (if not all) smartphones include the necessary sensors and communication equipment. In this sense, the proposed method can be implemented on a non-smartphone device (for example a BIBO-enabled ticket), if the sensors and communication equipment can be incorporated. It can use commercial off-the-shelf equipment, through mainly only software means.
ii) The involved components cause very low infrastructure costs. Only a dedicated BGW-unit will be required for each vehicle and needs to be installed on the desired vehicles.

### List of used abbreviation

- BIBO: Be In / Be Out
- BGW: BIBO Gateway
- CICO: Check In / Check out
- GSM: Global System for Mobile Communication
- GPRS: General Packet Radio Service
- UMTS: Universal Mobile Telecommunications System
- WLAN: Wireless Local Area Network

### List of cited documents

[1] EP 1 210 693 B1
   «Method and system for registering tickets»
   Siemens Transit Telematic Systems AG; 8212 Neuhausen (CH)
[2] EasyRide: Active Transponders for a Fare Collection System Passengers with an EasyRide card can board public transportation vehicles without prior ticket purchase Thomas Gyger and Olivier Desjeux EM Microelectronic Marin SA http://www.emmicroelectronic.com/webfiles/news/easyrideIEEE01.pdf
[3] «Integrated urban e-ticketing for public transport and touristic sites» Science and Technology Options Assessment European Parliamentary Research Service January 2014 PE 513.551
[4] Modernste Telematik fur ein automatisches Fahrgeldmanagement Dipl.-Ing. Dipl.-Wirtschaftsing. Klaus J. Koenen http://www.trafficforum.ethz.ch/vwt 2001/beitraege/VWT18proceedings pages428-436.pdf

## Claims

1. A method for registering tickets within a vehicle for public transportation, which tickets are provided with means for a bidirectional communication with a gateway unit in the vehicle and where said gateway unit further comprises at least an accelerometer, wherein accelerations of the said vehicle are measured by the accelerometer and stored as acceleration patterns in the gateway unit;
**characterized by**
a comparison of the stored acceleration pattern with a acceleration pattern measured by a accelerometer being part of the ticket and in case the patterns match the ticket is registered via the bidirectional communication as present in the said vehicle.

2. Method according to claim 1,
wherein a profile for a non-registration is assigned to a ticket the profile being determined by the environment of said ticket.

3. Method according to claim 2,
wherein the profile is a PKW-profile when the comparison of acceleration patterns matches a vehicle pattern provided the ticket is not in the range of a gateway unit.

4. Method according to claim 2,
wherein the profile being a walking-profile when the comparison of acceleration patterns matches a walking pattern.

5. Method according to one of the claims 1 to 4,
wherein measuring acceleration pattern by the accelerometer being part of the ticket comprises a frequency decomposition enabling to separate acceleration due to use of the ticket from acceleration due to the vehicle for public transportation.

6. Method according to one of the claims 1 to 5,
wherein measuring acceleration patterns by the accelerometer being part of the gateway unit comprises a use of a rotation matrix for obtaining the orientation of the movement of the vehicle for public transportation.

7. Method according to one of the claims 1 to 6,
wherein measuring acceleration patterns by the accelerometer being part of the gateway unit comprises a use of a rotation matrix for obtaining the orientation of the movement of the vehicle for public transportation.

8. A ticket comprising means for a bidirectional communication with a gateway unit in a vehicle for public transportation and with an accelerometer for carrying out the method according to one of the claims 1 to 7.

9. Ticket according to claim 8 wherein the ticket is a Smartphone equipped with an accelerometer.

10. A gateway unit comprising at least an accelerometer and means for a bidirectional communication with a ticket for carrying out the method according to one of the claims 1 to 7.

11. Gateway unit according to claim 10 additionally comprising a gyroscope for determining an acceleration pattern.
